(19) Europäisches Patentamt
European Patent Office
Office européen des brevets

(11) **EP 0 963 085 A1**

(12) **EUROPÄISCHE PATENTANMELDUNG**

(43) Veröffentlichungstag:
08.12.1999 Patentblatt 1999/49

(51) Int. Cl.⁶: **H04L 25/49**, H04L 25/03

(21) Anmeldenummer: 98110218.9

(22) Anmeldetag: 04.06.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(71) Anmelder:
SIEMENS AKTIENGESELLSCHAFT
80333 München (DE)

(72) Erfinder: Schenk, Heinrich, Dr.
81476 München (DE)

(54) **Verfahren zur adaptiven Filtereinstellung in einem QAM/CAP-System**

(57)    In dem erfindungsgemäßen Verfahren für eine adaptive Filtereinstellung der Koeffizienten des Filterpaares eines QAM/CAP-Empfängers, der einen A/D-Wandler, eine digitale Pegelregelung, ein adaptives Empfangsfilterpaar und einen nachfolgenden Entscheider aufweist, wird der n-te Filterkoeffizient eines Filters im i-ten Einstellschritt durch den Filterkoeffizienten des vorherigen Einstellschrittes i-1 um einen Korrekturwert vermindert, wobei der Korrekturwert das Produkt aus Entzerrungsfehler, verzögerten Eingangswert und einer Stellgröße $\gamma$ ist.

Fig. 1

EP 0 963 085 A1

**Beschreibung**

Die Erfindung betrifft ein Verfahren zur adaptiven Filtereinstellung in einem QAM/CAP-System sowie einen entsprechenden CAP-Empfänger.

Der Aufsatz AT&T and Bellcore: Design of Digital Carrierless AM/PM Transceivers, TEI.1.4/92-149, August 19, 1992 gibt eine Einführung in das Design digitaler, trägerloser CAP Transceiver und Empfänger, so daß die grundlegenden Strukturen hier nur kurz beschrieben werden.

Bei hohen Datenmengen erweist sich für die Duplex Datenübertragung über Teilnehmeranschlußleitungen ein Frequenzmultiplexverfahren trotz des höheren Bandbreitebedarfs als günstiger als ein Basisbandgleichlageverfahren mit Echokompensation, da das in diesem Geschwindigkeitsbereich dominante Nahnebensprechen durch selektive Filterung unterdrückt werden kann. Für die schnelle Datenübertragung im Anschlußbereich der Telefonteilnehmer werden daher unter dem Stichwort VDSL (Very high bitrate Digital Subscriber Line) derzeit Einträgerverfahren wie QAM (Quadraturamplitudenmodulation) und CAP (Carrierless Amplitude/Phase Modulation) diskutiert, da hiermit die verschiedenen Frequenzbereiche für Hin- und Rückrichtung in einfacher Weise durch geeignete Wahl der Träger- bzw. Mittenfrequenzen realisiert werden kann. Die Datenraten bewegen sich dabei in einem Bereich von etwa 2 Mbit/s bis 50 Mbit/s. Dabei soll sowohl ein symmetrischer als auch ein unsymmetrischer Betrieb möglich sein. Ein symmetrischer Betrieb, d.h. gleiche Datenraten in beide Richtungen, wird meist bei kommerziellen Anwendungen gefordert, während ein unsymmetrischer Betrieb, d.h. unterschiedliche Datenraten für die beiden Richtungen, im privaten Bereich meist ausreichend ist (hohe Datenrate zum Teilnehmer, niedrige Datenrate zum Service Provider).

Beim ADSL-Standard (Asymmetric Digital Subscriber Line) wurde bisher das diskrete Multitonverfahren standardisiert. Es ist jedoch damit zu rechnen, daß auch in diesem Anwendungsbereich Einträgerverfahren mit der CAP-Technologie standardisiert werden.

In einem CAP-System werden sendeseitig die binären Daten zu Gruppen vom L Bits zusammengesetzt und einem Codierer zugeführt. Dieser ordnet jeder der $2^L$ Kombinationen einen Punkt in einem zweidimensionalen Signalraum zu, der durch die kartesischen Koordinaten (x, y) definiert ist. Dieser Signalpunkt kann auch als Punkt der komplexen Zahlenebenen betrachtet werden.

Es wird zunächst ein CAP-Modulator betrachtet. Die zu übertragenden Signalpunkte, definiert durch die beiden kartesischen Koordinaten $a_K$ und $b_K$ zum Zeitpunkt kT, werden im Schrittakt (Symbolrate) $f_T = 1/T$ abgetastet und auf getrennte Teilkanäle gegeben, in denen sich jeweils ein Sendefilter befindet. Danach werden die Signale beider Teilkanäle addiert und das Sendesignal auf den Übertragungskanal gegeben.

In einem entsprechenden CAP-Empfänger, der das Gegenstück zu dem CAP-Transceiver bildet, wird das empfangene Eingangssignal einer A/D-Wandlung mit einem vorgegebenen Abtasttakt unterworfen. Nach der digitalen A/D-Wandlung wird eine digitale Pegelregelung durchgeführt, um den Pegel des Empfangs-/Nutzsignals möglichst unabhängig von der Übertragungsleitung und dem Übersprechen des eigenen Sendesignals sowie aller anderen Outbandstörungen auf einen konstanten Wert einzustellen. Nach der digitalen Pegelregelung gelangen die Abtastwerte auf ein Paar paralleler Empfangsfilter. Dabei müssen sich die Koeffizienten des Filterpaares adaptiv einstellen, wobei mit einem festen Koeffizientensatz, der für eine bestimmte Leitungslänge ausgelegt ist, begonnen wird. Nach der Empfangsfilterung werden die Signalwerte mit der Symbolrate abgetastet und einem Entscheider zugeführt. Dieser hat die Aufgabe, jedem empfangenen Wertepaar Empfangsdaten zuzuordnen. Nach erfolgter Einstellung und bei hinreichend geringen Störungen stimmen diese Empfangswerte, abgesehen von einer konstanten Verzögerung und einer zusätzlichen Drehung des komplexen Datenvektors um ± 90° oder ± 180°, mit den gesendeten Datenwerten überein.

Ein QAM/CAP-System bietet die Möglichkeit, die Kanalentzerrung mit Hilfe des ohnehin für die Demodulation benötigten Filterpaares, das als Hilbert Transformator ausgelegt ist, auszuführen. Hierzu müssen die Koeffizienten des Filterpaares adaptiv eingestellt werden.

In realen Übertragungssystemen setzt sich das Signal am Eingang des Empfängers prinzipiell aus zwei Anteilen zusammen, nämlich dem Nutzbandsignal mit Inbandstörungen sowie Outbandstörungen. Bei Outbandstörungen handelt es sich in erster Linie um Echos vom eigenen Sender, dessen Spektralanteile im benachbarten Frequenzband liegen, sowie um Signale im niederfrequenten Bereich, die von Diensten stammen, die die gleiche Übertragungsfrequenz benutzen, wie beispielsweise ISDN.

Während Inbandstörungen je nach Intensität und Stufigkeit der Übertragung unmittelbar Symbolfehler verursachen, die wiederum in begrenztem Maße durch geeignete Codierungsmaßnahmen reduziert werden können, lassen sich Outbandstörungen mit geeigneten selektiven Filtern weitgehend unterdrücken. Aus Aufwandsgründen ist es sinnvoll, sowohl eine analoge Vorfilterung als auch eine digitale Filterung mit dem Empfangsfilterpaar des QAM/CAP-Systems auszuführen.

In ungünstigen Anwendungsfällen, z.B. bei langen Übertragungsleitungen mit hoher Leitungsdämpfung, kann der Anteil der Outbandstörungen trotz analoger Vorfilterung am Eingang des digitalen Empfängers größer als das Nutzsignal sein. In diesem Fall muß das Empfangsfilterpaar die linearen Verzerrungen des Kanals ausgleichen und die restlichen Outbandstörungen durch eine genügend hohe Sperrdämpfung herausfiltern.

Das überlagerte Outbandstörung beeinträchtigt jedoch den Einstellvorgang des Filterpaares, da für die Koeffizienteneinstellung das Eingangssignal mit einem geeigneten Fehlerkriterium korreliert werden muß.

Der Erfindung liegt daher die Aufgabe zugrunde, ein Verfahren, das ein stabiles Einlaufen des Filterpaares eines QAM/CAP-Systems trotz Outbandstörungen gewährleistet, sowie einen entsprechenden CAP-Empfänger zu schaffen.

Die Aufgabe wird erfindungsgemäß durch die Merkmale der Ansprüche 1 und 11 gelöst. Bevorzugte Ausgestaltungen der Erfindung sind Gegenstand der Unteransprüche.

In dem erfindungsgemäßen Verfahren für eine adaptive Filtereinstellung der Koeffizienten des Filterpaares eines QAM/CAP-Empfängers, der einen A/D- Wandler, eine digitale Pegelregelung, ein adaptives Empfangsfilterpaar und einen nachfolgenden Entscheider aufweist, wird der n-te Filterkoeffizient eines Filters im i-ten Einstellschritt des Filters durch den Filterkoeffizienten des vorherigen Einstellschnittes vermindert um einen Korrekturwert gebildet, wobei der Korrekturwert das Produkt aus Entzerrungsfehler, verzögertem Eingangswert und einer Stellgröße $\gamma$ ist.

Das im Empfänger eingesetzte Empfangsfilterpaar bewirkt sowohl eine Trennung der beiden übertragenen Komponenten, eine Kanalentzerrung und eine Unterdrückung der Outbandstörungen durch selektive Filterung. Die Koeffizienten des Empfangsfilterpaars müssen sich, ausgehend von einer definierten Anfangslösung, adaptiv auf den momentanen Übertragungskanal nachstellen. Als Einstellalgorithmus kann der LMS-Algorithmus (Least Mean Square) verwendet werden. Die Einstellvorschrift lautet dann:

$$h_{1n}(i) = h_{1n}(i\text{-}1) - \gamma \cdot \{y(k\text{-}n)\} \cdot \{\Delta \hat{a}_k\} \qquad \text{1a)}$$

$$h_{2n}(i) = h_{2n}(i\text{-}1) - \gamma \cdot \{y(k\text{-}n)\} \cdot \{\Delta \hat{b}_k\} \qquad \text{1b)}$$

Dabei bezeichnet y(k) das Empfangssignal, $h_1$ den Filtersatz des ersten Filters und $h_2$ den Filtersatz des zweiten Filters.

Zur Vermeidung von echten Multiplikationen können Abwandlungen der obigen Einstellvorschrift verwendet werden, bei denen nur die Vorzeichen der Abtastwerte und/oder der mittleren absoluten Fehler verwendet werden:

$$h_{1n}(i) = h_{1n}(i\text{-}1) - \gamma \cdot SGN\{y(k\text{-}n)\} \cdot \{\Delta \hat{a}_k\} \qquad \text{2a)}$$

$$h_{2n}(i) = h_{2n}(i\text{-}1) - \gamma \cdot SGN\{y(k\text{-}n)\} \cdot \{\Delta \hat{b}_k\} \qquad \text{2b)}$$

oder

$$h_{1n}(i) = h_{1n}(i\text{-}1) - \gamma \cdot \{y(k\text{-}n)\} \cdot SGN\{\Delta \hat{a}_k\} \qquad \text{3a)}$$

$$h_{2n}(i) = h_{2n}(i\text{-}1) - \gamma \cdot \{y(k\text{-}n)\} \cdot SGN\{\Delta \hat{b}_k\} \qquad \text{3b)}$$

oder

$$h_{1n}(i) = h_{1n}(i\text{-}1) - \gamma \cdot SGN\{y(k\text{-}n)\} \cdot SGN\{\Delta \hat{a}_k\} \qquad \text{4a)}$$

$$h_{2n}(i) = h_{2n}(i\text{-}1) - \gamma \cdot SGN\{y(k\text{-}n)\} \cdot SGN\{\Delta \hat{b}_k\}. \qquad \text{4b)}$$

Aus schaltungstechnischen Gründen hinsichtlich der Realisierung ist es sinnvoll, für die Stellgröße den Reziprokwert einer Zweierpotenz zu wählen, also:

$$\gamma = 2^{-\eta} \qquad \text{5)}$$

Diese Stellgröße muß an die Wahl der Einstellvorschrift angepaßt werden. Sie sollte aus Stabilitätsgründen einen bestimmten Wert nicht überschreiten. Bei der Wahl der Stellgröße ist zu beachten, daß mit kleinerer Stellgröße die Genauigkeit der Koeffizienteneinstellung steigt, ebenso steigt jedoch auch die Koeffizientenwortlänge und damit der Realisierungsaufwand und die Einstellzeit. Zur Minimierung der Einstellzeit ist es sinnvoll, die Stellgröße abhängig vom momentanen Fehlermittelwert zu verändern. Dabei wird mit einer maximalen Stellgröße (minimales $\eta$) begonnen. Abhängig vom Fehlermittelwert wird der Wert von $\eta$ jeweils um Eins erhöht, bis der maximale Wert von $\eta$ (minimale Wert von $\gamma$) erreicht ist.

Das Signal y(k) enthält sowohl das Nutzsignal von der Gegenstation als auch die Outbandstörungen. Diese können in extremen Fällen größer als das Nutzsignal sein. Um auch in diesem Anwendungsfall ein optimales Verhalten zu erzielen, ist die Stellgröße auch an die Outbandstörungen anzupassen. Hierbei muß mit steigenden Outbandstörungen die Stellgröße verkleinert werden.

Für eine automatische Anpassung der Stellgröße ist zunächst die Generierung eines Kriteriums für die Größe der Outbandstörungen erforderlich. Dieses Kriterium wird gemäß dieser Erfindung am Ausgang des digitalen Regelverstärkers abgeleitet. Der Regelverstärker muß dabei den Empfangspegel so regeln, daß der Pegel des Nutzsignals am Ausgang des Filterpaares unabhängig von der Leitungslänge und den Outbandstörungen etwa konstant ist. Das Einstellkriterium für den Regelverstärker muß daher von den Filterausgangswerten abgeleitet werden. Dann setzt sich das Filtereingangssignal y(k) aus dem Nutzsignal mit etwa konstantem Pegel und den Outbandstörungen zusammen. Durch Mittelwertbildung der Betragswerte von y(k) kann somit auf die Intensität der Outbandstörungen geschlossen und die Stellgröße für die Koeffizienteneinstellung angepaßt werden.

Eine bevorzugte Ausführungsform der Erfindung wird nachfolgend anhand der Zeichnung erläutert.

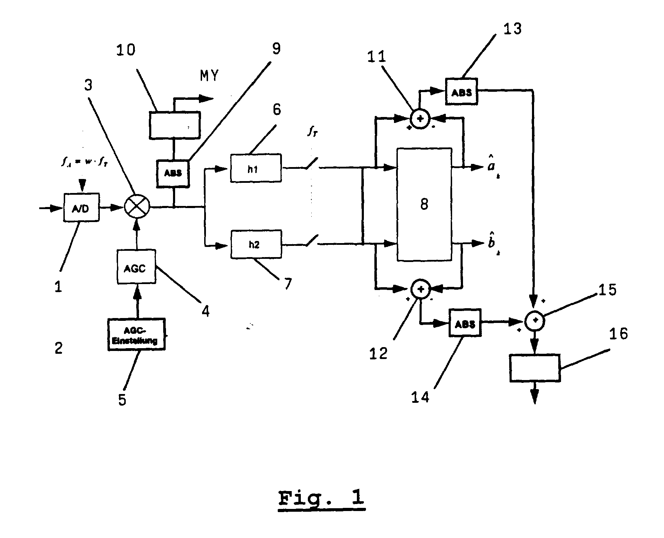

Fig. 1 zeigt ein Blockschaltbild der CAP-Empfängeranordnung.

Fig. 1 zeigt ein Blockschaltbild eines CAP-Empfängers mit den Teilsystemen für die Generierung des Kriteriums für die Einstellung der Stellgröße $\eta$. Dabei wird mit MY der mittlere Absolutwert nach dem Regelverstärker und mit MERR der mittlere absolute Fehler nach der Entzerrung, d.h. nach dem Filterpaar, bezeichnet.

Das analoge Eingangssignal y(k) wird in einem regelbaren A/D-Wandler 1 mit einer Abtastfrequenz $f_A = w \cdot f_T$ in ein digitales Signal y(k) gewandelt. Dabei ist w eine ganze Zahl größer Eins (w > 1), beispielsweise 4 oder 6 oder größer, und für die Abtastfrequenz $f_A$ muß das Abtasttheorem erfüllt sein. Danach erfolgt eine automatische Anpassung des Signalpegels in einem Regelverstärker 2 bestehend aus einem Multiplizierer 3 und einer Vorrichtung 4 zur Erzeugung des Verstärkungsfaktors AGC sowie einer Regelung 5. Anschließend gelangt das Empfangssignal in das Paar der Empfangsfilter 6 und 7, die durch entsprechende Koeffizientensätze $h_1$ und $h_2$ gekennzeichnet sind. Die gefilterten Signale der Filterzweige werden dann mit der Symbolfrequenz $f_T$ abgetastet und einem Entscheider 8 zugeführt, der jedem empfangenen Wertepaar Empfangsdaten $\hat{a}_k$ und $\hat{b}_k$ zuordnet.

Wie in Fig. 1 dargestellt ist, wird der mittlere Absolutwert MY nach dem Regelverstärker 2 mittels eines Betragsbildners 9 und einer Mittelwertbildner 10 erzeugt. Die Größe dieses Wertes ist ein Maß für die Outbandstörungen.

Der mittlere absolute Fehler MERR wird erzeugt, indem zuerst die Differenzen der Empfangswerte vor und nach dem Entscheider 8 des jeweiligen Filterzweigs in entsprechenden Addierern 11, 12 gebildet werden, anschließend die jeweiligen Beträge der Differenzen in entsprechenden Betragbildners 13, 14 zur Erzeugung der absoluten Einzelfehler gebildet werden, und in einem weiteren Addierer 15 die Einzelfehler addiert werden. Nach einer anschließenden Mittelung in einem weiteren Mittelwertbildner 16 ergibt sich der absolute mittlere Fehler MY.

Für die Wahl der Stellgröße muß allgemein gelten:

- Je größer MY, desto kleiner die Stellgröße $\gamma$ und desto größer der Wert von $\eta$, und

- Je kleiner MERR, desto kleiner die Stellgröße $\gamma$ und desto größer der Wert von $\eta$.

Der jeweils aktuelle Wert für die Stellgröße $\eta$, die in den obigen Gleichungen 1 - 4 unter Verwendung von Gl. 5 benötigt wird, kann wie folgt bestimmt werden, wobei Schwellwerte S1, S2,..., Sn für den Pegel und E1, E2,..., Em für den mittleren absoluten Fehler definiert und verwendet werden:

Es wird ein Anfangstellwert $\eta_0$ vorgegeben.

Berechnung einer Zwischengröße $\eta_1$:

$$\eta_1 = \eta_0$$
$$\text{wenn } MY < S1 \Rightarrow \quad \eta_1 = \eta_0 - 1$$
$$\text{wenn } MY < S2 \Rightarrow \quad \eta_1 = \eta_0 - 2$$
$$\text{wenn } MY < S3 \Rightarrow \quad \eta_1 = \eta_0 - 3$$
$$.$$
$$.$$
$$.$$
$$\text{wenn } MY < Sn \Rightarrow \quad \eta_1 = \eta_0 - n,$$

wobei gilt, daß S1 > S2 > S3....> Sn ist.

Berechnung der Größe $\eta$:

$$\eta = \eta_1$$
$$\text{wenn } MERR < E1 \Rightarrow \quad \eta = \eta_1 + 1$$
$$\text{wenn } MERR < E2 \Rightarrow \quad \eta = \eta_1 + 2$$
$$\text{wenn } MERR < E3 \Rightarrow \quad \eta = \eta_1 + 3$$
$$.$$
$$.$$
$$.$$
$$\text{wenn } MERR < Em \Rightarrow \quad \eta = \eta_1 + m,$$

wobei gilt, daß E1 > E2 > E3 ...> Em ist.

Die benötigten Mittelwerte lassen sich beispielsweise jeweils mit Hilfe eines rekursiven Filters erster Ordnung generieren.

Bezugszeichenliste

| | |
|---|---|
| 1 | A/D-Wandler |
| 2 | Regelverstärker |
| 3 | Multiplizierer |
| 4 | Verstärkungsfaktor |
| 5 | Regler |
| 6 | Filter |
| 7 | Filter |
| 8 | Entscheider |
| 9 | Betragsbildner |
| 10 | Mittelwertbildner |
| 11 | Addierer |
| 12 | Addierer |
| 13 | Mittelwertbildner |
| 14 | Mittelwertbildner |
| 15 | Addierer |
| 18 | Mittelwertbildner |
| MERR | mittlerer absoluter Fehler (des Entscheiders) |
| MY | mittlere Absolutwert nach dem Regelverstärker |

AGC     Verstärkungsfaktor

**Patentansprüche**

1. Verfahren für eine adaptive Filtereinstellung des Filterpaares eines QAM/CAP-Empfängers, der einen A/D- Wandler (1), eine digitale Pegelregelung (2), ein adaptives Empfangsfilterpaar (6, 7) und einen nachfolgenden Entscheider (8) aufweist,
**dadurch gekennzeichnet,**
daß der n-te Filterkoeffizient eines Filters (6, 7) im i-ten Einstellschritt des Filters (6,7) durch den Filterkoeffizienten des vorherigen Einstellschrittes i-1 vermindert um einen Korrekturwert gebildet wird, wobei der Korrekturwert das Produkt aus Entzerrungsfehler, verzögertem Eingangswert und einer Stellgröße $\gamma$ ist.

2. Verfahren nach Anspruch 1,
**dadurch gekennzeichnet,** daß die Stellgröße $\gamma$ der reziproke Wert einer Zweierpotenz ist, d.h. $\gamma = 2^{-\eta}$ .

3. Verfahren nach einem der Ansprüche 1 oder 2,
**dadurch gekennzeichnet,** daß die Stellgröße $\gamma$ in Abhängigkeit vom momentanen mittleren absoluten Fehler (MERR) geregelt wird.

4. Verfahren nach Anspruch 3,
**dadurch gekennzeichnet,** daß die Stellgröße $\gamma$ umso kleiner gewählt wird, je kleiner der mittlere absolute Fehler (MERR) ist.

5. Verfahren nach einem der vorangegangenen Ansprüche,
**dadurch gekennzeichnet,** daß die Stellgröße in Abhängigkeit von den Outbandstörungen geregelt wird, wobei der mittlere Absolutwert (MY) des Signals nach dem Regelverstärker (2) und vor den Filtern (6, 7) als Regelkriterium verwendet wird.

6. Verfahren nach Anspruch 5,
**dadurch gekennzeichnet,** daß die Stellgröße $\gamma$ umso kleiner gewählt wird, je größer der mittlere Absolutwert (MY) ist.

7. Verfahren nach einem der Ansprüche 1- 6,
**dadurch gekennzeichnet,** daß die Einstellvorschrift lautet:

$$h_{1n}(i) = h_{1n}(i-1) - \gamma \cdot \{y(k-n)\} \cdot \{\Delta \hat{a}_k\}$$

für den Filter mit dem Koeffizientensatz $h_1$ und

$$h_{2n}(i) = h_{2n}(i-1) - \gamma \cdot \{y(k-n)\} \cdot \{\Delta \hat{b}_k\}$$

für den Filter mit dem Koeffizientensatz $h_2$, wobei y(k) das Empfangssignal ist.

8. Verfahren nach einem der Ansprüche 1 - 6,
**dadurch gekennzeichnet,** daß die Einstellvorschrift lautet:

$$h_{1n}(i) = h_{1n}(i-1) - \gamma \cdot SGN\{y(k-n)\} \cdot \{\Delta \hat{a}_k\}$$

für den Filter mit dem Koeffizientensatz $h_1$ und

$$h_{2n}(i) = h_{2n}(i-1) - \gamma \cdot SGN\{y(k-n)\} \cdot \{\Delta \hat{b}_k\}$$

für den Filter mit dem Koeffizientensatz $h_2$, wobei y(k) das Empfangssignal ist.

9. Verfahren nach einem der Ansprüche 1 - 6,
**dadurch gekennzeichnet,** daß die Einstellvorschrift lautet:

$$h_{1n}(i) = h_{1n}(i-1) - \gamma \cdot \{y(k-n)\} \cdot SGN\{\Delta \hat{a}_k\}$$

für den Filter mit dem Koeffizientensatz $h_1$ und

$$h_{2n}(i) = h_{2n}(i-1) - \gamma \cdot \{y(k-n)\} \cdot SGN\{\Delta \hat{b}_k\}$$

für den Filter mit dem Koeffizientensatz $h_2$, wobei $y(k)$ das Empfangssignal ist.

10. Verfahren nach einem der Ansprüche 1 - 6,
**dadurch gekennzeichnet,** daß die Einstellvorschrift lautet:

$$h_{1n}(i) = h_{1n}(i-1) - \gamma \cdot SGN\{y(k-n)\} \cdot SGN\{\Delta \hat{a}_k\}$$

für den Filter mit dem Koeffizientensatz $h_1$ und

$$h_{2n}(i) = h_{2n}(i-1) - \gamma \cdot SGN\{y(k-n)\} \cdot SGN\{\Delta \hat{b}_k\}$$

für den Filter mit dem Koeffizientensatz $h_2$, wobei $y(k)$ das Empfangssignal ist.

11. Adaptiver CAP-Empfänger zur Durchführung des Verfahrens nach einem der Ansprüche 1 - 10.

Fig. 1

## EUROPÄISCHER RECHERCHENBERICHT

**Europäisches Patentamt**

Nummer der Anmeldung

EP 98 11 0218

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 806 854 A (LUCENT) 12. November 1997 <br> * Seite 2, Zeile 56 * <br> --- | 1-11 | H04L25/49 <br> H04L25/03 |
| A | YANG ET AL.: "The multimodulus blind equalization algorithm" <br> 1997 13TH INTERNATIONAL CONFERENCE ON DIGITAL SIGNAL PROCESSING, <br> 2. - 4. Juli 1997, Seiten 127-130, <br> XP002085389 <br> New York, US <br> * Seite 128, linke Spalte, Absatz 3 - rechte Spalte, Absatz 4 * <br> --- | 1-11 | |
| A | EP 0 831 622 A (LUCENT) 25. März 1998 <br> * Seite 3, Zeile 35 - Zeile 40 * <br> --- | 1-11 | |
| A | EP 0 748 124 A (DISCOVISION) <br> 11. Dezember 1996 <br> * Seite 28, Zeile 22 - Zeile 23 * <br> * Seite 28, Zeile 33 - Zeile 34 * <br> --- | 1,2,5,6, 11 | |
| A | SHALASH, PARHI: "Three-dimensional equalization for the 3-D QAM system with strength reduction" <br> 998 IEEE INTERNATIONAL SYMPOSIUM ON CIRCUITS AND SYSTEMS,31. Mai 1998 <br> - 3. Juni 1998, Seiten 453-456, <br> XP002085390 <br> New York, US <br> * Seite 453, rechte Spalte, Absatz 5 - Seite 454, linke Spalte, Absatz 1 * <br> * Seite 454, linke Spalte, Absatz 3 * <br> * Seite 455, rechte Spalte, Absatz 4 - Seite 456, linke Spalte, Absatz 1 * <br> ----- | 1,11 | **RECHERCHIERTE SACHGEBIETE (Int.Cl.6)** <br><br> H04L |

Der vorliegende Recherchenbericht wurde für alle Patentansprüche erstellt

| Recherchenort | Abschlußdatum der Recherche | Prüfer |
|---|---|---|
| DEN HAAG | 23. November 1998 | Scriven, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**ANHANG ZUM EUROPÄISCHEN RECHERCHENBERICHT**
**ÜBER DIE EUROPÄISCHE PATENTANMELDUNG NR.**
EP 98 11 0218

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-11-1998

| Im Recherchenbericht angeführtes Patentdokument | | Datum der Veröffentlichung | Mitglied(er) der Patentfamilie | | Datum der Veröffentlichung |
|---|---|---|---|---|---|
| EP 0806854 | A | 12-11-1997 | US | 5793807 A | 11-08-1998 |
| | | | CA | 2200139 A | 07-11-1997 |
| | | | JP | 10098418 A | 14-04-1998 |
| EP 0831622 | A | 25-03-1900 | US | 5835731 A | 10-11-1998 |
| | | | CA | 2213038 A | 18-03-1998 |
| | | | JP | 10126315 A | 15-05-1998 |
| EP 0748124 | A | 11-12-1996 | CA | 2170469 A | 08-12-1996 |
| | | | CN | 1138795 A | 25-12-1996 |
| | | | EP | 0874499 A | 28-10-1998 |
| | | | EP | 0874466 A | 28-10-1998 |
| | | | EP | 0874491 A | 28-10-1998 |
| | | | EP | 0877517 A | 11-11-1998 |
| | | | EP | 0877514 A | 11-11-1998 |
| | | | JP | 9008853 A | 10-01-1997 |
| | | | JP | 10135941 A | 22-05-1998 |
| | | | JP | 10093438 A | 10-04-1998 |
| | | | US | 5717715 A | 10-02-1998 |
| | | | US | 5635864 A | 03-06-1997 |
| | | | US | 5668831 A | 16-09-1997 |
| | | | US | 5692020 A | 25-11-1997 |
| | | | US | 5761210 A | 02-06-1998 |

EPO FORM P0461

Für nähere Einzelheiten zu diesem Anhang : siehe Amtsblatt des Europäischen Patentamts, Nr.12/82